(19) Europäisches Patentamt
European Patent Office
Office européen des brevets

(11) EP 0 632 352 B1

(12) **EUROPEAN PATENT SPECIFICATION**

(45) Date of publication and mention
of the grant of the patent:
**28.01.1998 Bulletin 1998/05**

(51) Int Cl.⁶: **G05B 19/04**

(21) Application number: **94107993.1**

(22) Date of filing: **24.05.1994**

(54) **System for interfacing one or more intelligent peripheral units with a weaving loom or other textile machine**

Vorrichtung um eine Schnittstelle zwischen einer oder mehreren intelligenten peripheren Einheiten und einem Webstuhl, oder einer anderen Textilmaschine, zu Bilden

Système pour établir une interface entre une ou plusieurs unités périphériques intelligentes et un métier à tisser ou une autre machine textile

(84) Designated Contracting States:
**BE CH DE LI SE**

(72) Inventor: **Zenoni, Pietro**
**I-24026 Leffe (Bergamo) (IT)**

(30) Priority: **26.05.1993 IT TO930361**

(74) Representative: **Modiano, Guido, Dr.-Ing. et al**
**Modiano & Associati S.r.l.**
**Via Meravigli, 16**
**20123 Milano (IT)**

(43) Date of publication of application:
**04.01.1995 Bulletin 1995/01**

(73) Proprietor: **L.G.L. ELECTRONICS S.p.A.**
**I-24100 Bergamo (IT)**

(56) References cited:
**EP-A- 0 145 319          EP-A- 0 422 507**
**US-A- 4 958 277**

## Description

The present invention relates to a system for interfacing one or more intelligent peripheral units with a weaving loom or other textile machine.

Conventional weaving looms, and other similar textile machines, use peripheral units such as, typically, weft feeders for gripper looms, weft pre-measurers for jet looms, brakes for automatic weft tension control and the like, all of which are controlled electronically, and therefore briefly termed "intelligent", and are interfaced with sensors and/or actuators which reside on the loom.

In known electronic applications, for weaving looms or other textile machines, interfacing between the above intelligent peripheral units and the loom is provided by means of digital signals or in any case signals of the "on-off" (yes-no) type with dedicated wires whose number is equal to the number of signals to be transmitted to and from each peripheral unit.

It is evident that this known interfacing system has obvious drawbacks due to the multiplication of the dedicated wires in proportion to the increase in the number of peripheral units associated with the loom and of functions performed by each unit and controlled by the sensors and/or actuators of said loom.

In order to obviate these drawbacks it has already been proposed to use a serial asynchronous connection between the loom and the peripheral units, but so far the applications that have been produced have failed to yield satisfactory results not because of the complexity of the circuits residing on the loom and on the peripheral units, but essentially because of the slowness of their transmission, the baud rate of which is generally lower than, or equal to, 38,400 baud. Accordingly, the serial interfaces produced so far are suitable only for transmitting signals related to the medium- and long-term operation of the loom, such as the setup and configuration signals and the like, but are fully inadequate for real-time data transmission, which however is indispensable to perform the instantaneous control of many functions both of the peripheral units and of the loom, such as for example control of the modulated-action electronic weft brakes in feeders for gripper looms, release of the electromagnetic retention of the weft in feeders for jet looms, and real-time control of the drivers of feeder motors and the like.

In order to provide real-time data transmission between the loom controller and peripheral units such as pre-feeders, electronic brakes, motor drivers and the like, the current trend is to provide a two-way connection between said controller and said peripheral units on a single network that operates at high speed and has negligible transmission delays.

However, this entails the use of highly complex protocols and consequently of equally complex and expensive electric circuits that reside both on the loom and on the peripheral units, and therefore this network connection is economically disadvantageous.

It is known from EP-A-0145319 a communication interfacing system suitable for interfacing a master unit and a plurality of parts. In this known system data transmission and reception are carried out sequentially and with dedicated clock signal lines.

A principal aim of the present invention is to eliminate the drawbacks of the above described known interfacing systems, and within the scope of this general aim the present invention has the important object of providing a system for mutually interfacing a weaving loom -- or other textile machine -- and one or more intelligent peripheral units that is structurally very simple but can transmit signals bidirectionally substantially in real time, with delays on the order of hundredths of a millisecond.

Another important object of the invention is to provide an interfacing system that allows to use peripheral units without alterations, no adaptation to the communication line being required for said peripheral units.

An additional object of the present invention is to provide a selective interface connection, i.e. a connection that rules out any possibility of conflict among signals directed to/from the individual intelligent peripheral units, the transmission of any priority signal (dominant bit) being however excluded.

With this aim, these important objects and others in view, which will become apparent from the following detailed description, there is provided, according to the present invention, a system and a method for interfacing one or more intelligent peripheral units with a weaving loom or other textile machine, as defined in claim 1 and claim 5, respectively.

The master unit starts communication and uninterruptedly polls the slave units to allow them to transmit and receive any information in a cyclic manner. If there is no information to be transmitted, the polled slave unit issues a conventional signal that allows the master unit to pass on to the next slave unit.

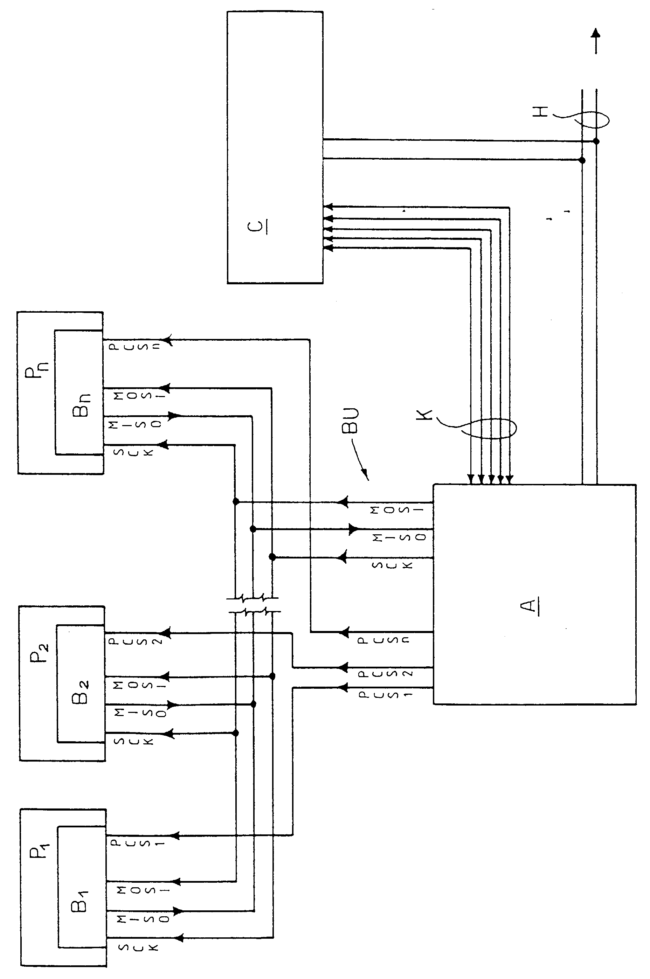

The invention is now described in detail with reference to the accompanying drawing, given by way of non-limitative example and illustrating the synchronous serial interfacing layout according to the invention between a textile machine, particularly a weaving loom, and a plurality of intelligent peripheral units.

In the drawing, the reference letter A designates the master unit, which is formed by a digital circuit of any degree of complexity that comprises, for example, discrete and/or sequential logic circuits (microprocessors). The master unit A is interfaced on one side with a loom controller C from which it receives, and to which it transmits, over dedicated wires K and/or a serial line, a set of signals produced by corresponding sensors and fed to corresponding actuators of the loom by means of said controller. By means of a network H, the master unit A can also be connected to other similar looms (or textile machines) which are controlled in parallel.

On the other side, the master unit A is bidirectionally interfaced with a plurality of slave units $B_1$-$B_2$-$B_n$, each

of which resides on a corresponding intelligent peripheral unit $P_1$-$P_2$-$P_n$; the peripheral units comprise for example weft feeders optionally equipped with electronic weft brakes, or weft measurers if the loom is of the jet type.

Connection between the master unit A and the slave units B is provided by means of a serial interface of the SPI (Serial Peripheral Interface) type described in the publication "QSM Queued Serial Module" by Motorola, which is capable of transmitting all the information exchanged bidirectionally by said master and slave units; this information is decoded beforehand when it is directed from the master unit to the slave units and is conversely encoded when it is directed from the slave units to the master unit.

According to the invention, the bus BU for synchronous serial interfacing comprises:

-- a series of dedicated unidirectional signals PCS that connect the master unit A to each slave unit B; in the direction from A to B, they select the peripheral unit involved in the communication. The master unit A enables, with the methods specified hereinafter, each slave unit B by means of a corresponding dedicated selection signal;

-- a first signal MOSI which is common to all the slave units and constitutes a unidirectional data line for transmitting binary information from the master unit A to the generic selected slave unit Bx;

-- a second signal MISO which is also common to all the slave units and constitutes a unidirectional line for transmitting binary information from the generic selected slave unit Bx to the master unit A;

-- a third signal SCK which is common to all the slave units and forms a unidirectional line, in the direction from A to B, for transferring the clock pulses of the serial data transmission to and from the slave units, respectively over the lines MOSI and MISO.

In the interfacing according to the invention, only the master unit A can initiate communication, and in order to allow the slave units $B_1$ to $B_n$ to transmit any data to the master unit, said master unit queries them in a cyclic and uninterrupted manner with the known method termed "polling". Transfer of information from master to slave over the line MOSI and in the opposite direction over the line MISO occurs simultaneously.

If the generic slave unit Bx has no data to transmit, it emits an NTS signal (nothing to say) to the master unit A, which in turn sends an NTS signal to the polled slave unit if it has no signals to send to that slave unit. Data is sent as digital messages constituted by a preset number of bits that is chosen as small as possible within the limits allowed by the need to detect possible incorrect transmissions and to transmit a sufficient amount of information. A standard message that meets these requirements is advantageously constituted by 32 bits. A possible long and complex message that however relates to the medium- and long-term operation of the interfaced machines is split into multiple frames of 32 bits each, transmitted in succession during each polling operation.

With the synchronous serial interfacing layout according to the present invention, the maximum transfer delay for each message is obtained from the following relation:

$$RT = \frac{L \cdot N}{B}$$

where RT is the transfer delay, L is the number of bits that form the message, B is the baud rate in bits/second and N is the number of connected slave units.

Assuming that L=32, B=4 M baud, and N=8, RT is equal to 0.064 ms, which is an interval abundantly sufficient to transfer signals of the specified type substantially in real time.

The messages related to the medium- or long-term operation of the interfaced machines have a lower priority than those related to the immediate operation of said machine.

The higher the number of peripheral units $P_1$ to $P_n$ associated with the loom, the more advantageous the described interfacing system becomes. Furthermore, said peripheral units must be as spatially close as possible to each other, so as to simplify physical connections between said units and the master unit A of the loom, thus avoiding complicated and expensive signal transmission systems such as optical fibers and the like.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A system for interfacing one or more intelligent peripheral units with a weaving loom or other textile machine, characterized in that it comprises:

   - a master unit (A) constituted by a logic circuit adapted to be connected on one side with a loom controller (C), over dedicated wires and/or a serial line, and on the other side with said one or more intelligent peripheral units ($P_1$, $P_2$, $P_n$);
   - a set of slave units ($B_1$, $B_2$, $B_n$), each of which is an integral part of a respective peripheral unit of said peripheral units ($P_1$, $P_2$, $P_n$), said slave units being constituted by logic circuits capable of sending and of receiving data to/from said master unit;

- a serial bus which connects bidirectionally said master unit to each of said one or more slave units, said serial bus comprising: signal lines for dedicated signals (PCS1, PCS2, PCSn) which connect the master unit (A) to each slave units ($B_1$, $B_2$, $B_n$) in order to select the individual slave units; a signal line for a first signal (MOSI), common to all said slave units, for the unidirectional transmission of binary information from the master unit (A) to the selected slave unit ($B_1$, $B_2$, $B_n$); a signal line for a second signal (MISO), common to all said slave units, for the unidirectional transmission of binary information from said selected slave unit ($B_1$, $B_2$, $B_n$) to said master unit (A); and a signal line for a third signal (SCK), common to all said slave units, for the unidirectional transmission to said slave units of clock pulses emitted by said master unit (A), whereby between said master unit (A) and each selected slave unit, the said transmission and reception being carried out simultaneously.

2. A system according to claim 1, characterized in that said binary information bidirectionally exchanged between said slave units ($B_1$, $B_2$, $B_n$) and said master unit (A) are data messages formed by a preset number of bits.

3. System according to claim 2, characterized in that said preset number of bits is equal to 32.

4. System according to claim 1, characterized in that said serial bus arranged between said master unit (A) and said slave units ($B_1$, $B_2$, $B_n$) is of the Serial Peripheral Interface type.

5. A method of interfacing one or more intelligent peripheral units ($P_1$, $P_2$, $P_n$) to a master unit (A), said master unit being connected to a loom controller of a weaving loom or other textile machine, the method being characterized by comprising the steps of:

- cyclically and continuously polling slave units ($B_1$, $B_2$, $B_n$) each of which is an integral part of a respective peripheral unit of said peripheral units ($P_1$, $P_2$, $P_n$), to transmit or receive any data messages to or from said slave units, said transmission and reception being carried out simultaneously by a serial bus bidirectionally between a selected slave unit and said master unit (A), the transmission from said master unit (A) to said slave units being carried out over a first signal line (MOSI) of said serial bus, the reception from said slave units being carried out over a second signal line (MISO) of said serial bus, a third signal line (SCK) of said serial bus being used for the unidirectional transmission to said slave units of clock pulses output by said master unit (A); and

- decoding the data messages directed from the master unit (A) to the slave units, before delivering said data messages to the slave units, and encoding the data messages directed from each slave unit to said master unit (A) before delivering said data messages to said master unit (A).

6. A method according to claim 5, characterized in that said data messages bidirectionally exchanged between said master unit (A) and said slave units ($B_1$, $B_2$, $B_n$) are formed by a preset number of bits.

7. A method according to claim 6, characterized in that said preset number of bits is equal to 32.

## Patentansprüche

1. System zum Verbinden einer oder mehrerer intelligenter Peripherieeinheit(en) mit einem Webstuhl oder einer anderen Textilmaschine über eine Schnittstelle, dadurch gekennzeichnet, daß es folgendes aufweist:

- eine Haupteinheit (A), die durch einen Logikkreis gebildet wird, der dafür ausgelegt ist, auf einer Seite über reservierte Drähte und/oder eine serielle Leitung mit einer Webstuhlsteuerung (C) und auf der anderen Seite mit einer oder mehreren intelligenten Peripherieeinheit (en) ($P_1$, $P_2$, $P_n$) verbunden zu werden,

- einen Satz von Untereinheiten ($B_1$, $B_2$, $B_n$), von denen jede ein integraler Bestandteil einer jeweiligen Peripherieeinheit der Peripherieeinheiten ($P_1$, $P_2$, $P_n$) ist, wobei die Untereinheiten durch Logikkreise gebildet werden, die Daten zur Haupteinheit senden und von ihr empfangen können,

- einen seriellen Bus, der die Haupteinheit bidirektional mit jeder der einen oder mehreren Untereinheit(en) verbindet, wobei der serielle Bus folgendes aufweist: Signalleitungen für reservierte Signale (PCS1, PCS2, PCSn), die die Haupteinheit (A) mit jeder Untereinheit ($B_1$, $B_2$, $B_n$) verbinden, um die individuelle Untereinheit auszuwählen, eine Signalleitung für ein erstes Signal (MOSI), die allen Untereinheiten gemeinsam ist, zur unidirektionalen Übertragung binärer Informationen von der Haupteinheit (A) zur ausgewählten Untereinheit ($B_1$, $B_2$, $B_n$), eine Signalleitung für ein zweites Signal (MISO), die allen Untereinheiten gemeinsam ist, zur unidirektionalen Übertragung binärer Informationen von der ausgewählten Untereinheit ($B_1$, $B_2$, $B_n$) zur Haupteinheit (A) und eine Signalleitung für ein drittes Signal (SCK), die allen Untereinheiten gemeinsam ist, zur unidirektionalen Übertragung von Schrittpulsen, die von der Haupteinheit (A) ausgesendet werden, zu den Untereinheiten, wobei zwischen der Haupteinheit (A) und jeder ausgewählten Untereinheit die Übertragung und der Empfang gleichzeitig ausgeführt werden.

2. System nach Anspruch 1, dadurch gekennzeichnet, daß die binäre Informationen, die zwischen den Untereinheiten (B₁, B₂, Bₙ) und der Haupteinheit (A) bidirektional ausgetauscht wird, Datennachrichten sind, die durch eine vorgegebene Anzahl an Bits gebildet werden.

3. System nach Anspruch 2, dadurch gekennzeichnet, daß die vorgegebene Anzahl an Bits gleich 32 ist.

4. System nach Anspruch 1, dadurch gekennzeichnet, daß der serielle Bus, der zwischen der Haupteinheit (A) und den Untereinheiten (B₁, B₂, Bₙ) angeordnet ist, vom Typ serielle Peripherieschnittstelle ist.

5. Verfahren zum Verbinden einer oder mehrerer intelligenter Peripherieeinheit(en) (P₁, P₂, Pₙ) mit einer Haupteinheit (A) über eine Schnittstelle, wobei die Haupteinheit mit einer Webstuhlsteuerung eines Webstuhls oder einer anderen Textilmaschine verbunden ist, wobei das Verfahren dadurch gekennzeichnet ist, daß es die folgenden Schritte aufweist:

  - zyklisches und kontinuierliches Abfragen von Untereinheiten (B₁, B₂, Bₙ), von denen jede ein integraler Bestandteil einer jeweiligen Peripherieeinheit der Peripherieeinheiten (P₁, P₂, Pₙ) ist, um Datennachrichten zu oder von den Untereinheiten zu übertragen oder zu empfangen, wobei das Übertragen und Empfangen gleichzeitig von einem seriellen Bus bidirektional zwischen einer ausgewählten Untereinheit und der Haupteinheit (A) ausgeführt werden, wobei das Übertragen von der Haupteinheit (A) zu den Untereinheiten über eine erste Signalleitung (MOSI) des seriellen Busses ausgeführt wird, das Empfangen von den Untereinheiten über eine zweite Signalleitung (MISO) des seriellen Busses ausgeführt wird, wobei eine dritte Signalleitung (SCK) des seriellen Busses zur unidirektionalen Übertragung von Schrittpulsen, die von der Haupteinheit (A) ausgegeben werden, zu den Untereinheiten verwendet wird, und
  - Decodieren der Datennachrichten, die von der Haupteinheit (A) zu den Untereinheiten gerichtet sind, vor dem Leiten der Datennachrichten zu den Untereinheiten und Codieren der Datennachrichten, die von jeder Untereinheit zur Haupteinheit (A) gerichtet sind, vor dem Leiten der Datennachrichten zur Haupteinheit (A).

6. Verfahren nach Anspruch 5, dadurch gekennzeichnet, daß die Datennachrichten, die zwischen der Haupteinheit (A) und den Untereinheiten (B₁, B₂, Bₙ) bidirektional ausgetauscht werden, durch eine vorgegebene Anzahl an Bits gebildet werden.

7. Verfahren nach Anspruch 6, dadurch gekennzeichnet, daß die vorgegebene Anzahl an Bits gleich 32 ist.

## Revendications

1. Système pour établir une interface entre une ou plusieurs unités périphériques intelligentes et un métier à tisser ou une autre machine textile, caractérisé en ce qu'il comprend :

  - une unité maîtresse (A) constituée par un circuit logique adapté pour être relié, d'un côté, à une commande de métier à tisser (C), par des fils électriques spécialisés et/ou une ligne sérielle, et, de l'autre côté, à ladite ou auxdites plusieurs unités périphériques intelligentes (P₁, P₂, Pₙ) ;
  - une série d'unités auxiliaires (B₁, B₂, Bₙ), chacune desquelles est une partie intégrante d'une unité périphérique respective desdites unités périphériques (P₁, P₂, Pₙ), lesdites unités auxiliaires étant constituées par des circuits logiques capables d'émettre et de recevoir des données vers et de ladite unité maîtresse ;
  - un bus sériel qui relie, de façon bidirectionnelle, ladite unité maîtresse à chacune desdites unités auxiliaires, ledit bus sériel comprenant : des lignes pour des signaux spécialisés (PCS1, PCS2, PCSn) qui relient l'unité maîtresse (A) à chaque unité auxiliaire (B₁, B₂, Bₙ) de façon à sélectionner les unités auxiliaires individuelles ; une ligne pour un premier signal (MOSI), commune à toutes les unités auxiliaires, pour la transmission unidirectionnelle d'informations binaires de l'unité maîtresse (A) à l'unité auxiliaire choisie (B₁, B₂, Bₙ) ; une ligne pour un deuxième signal (MISO), commune à toutes lesdites unités auxiliaires, pour la transmission unidirectionnelle d'informations binaires de ladite unité auxiliaire choisie (B₁, B₂, Bₙ) à ladite unité maîtresse (A) ; et une ligne pour un troisième signal (SCK), commune à toutes lesdites unités auxiliaires, pour la transmission unidirectionnelle auxdites unités auxiliaires d'impulsions d'horloge émises par ladite unité maîtresse (A), grâce à quoi, entre ladite unité maîtresse (A) et chaque unité auxiliaire sélectionnée, ladite transmission et ladite réception sont mises en oeuvre de façon simultanée.

2. Système selon la revendication 1, caractérisé en ce que lesdites informations binaires échangées de façon bidirectionnelle entre lesdites unités auxiliaires ($B_1$, $B_2$, $B_n$) et ladite unité maîtresse (A) sont des messages de données formés par un nombre prédéterminé de bits.

3. Système selon la revendication 2, caractérisé en ce que ledit nombre prédéterminé de bits est égal à 32.

4. Système selon la revendication 1, caractérisé en ce que ledit bus sériel agencé entre ladite unité maîtresse (A) et lesdites unités auxiliaires ($B_1$, $B_2$, $B_n$) est du type interface périphérique sérielle.

5. Procédé pour établir une interface entre une ou plusieurs unités périphériques intelligentes ($P_1$, $P_2$, $P_n$) et une unité maîtresse (A), ladite unité maîtresse étant reliée à une commande d'un métier à tisser ou d'une autre machine textile, le procédé étant caractérisé en ce qu'il comprend les étapes de :

- sonder, de façon cyclique et continue, des unités auxiliaires ($B_1$, $B_2$, $B_n$), chacune desquelles est une partie intégrante d'une unité périphérique respective desdites unités périphériques ($P_1$, $P_2$, $P_n$), pour transmettre ou recevoir tout message de données vers ou desdites unités auxiliaires, ladite transmission et ladite réception étant mises en oeuvre simultanément par un bus sériel, de façon bidirectionnelle, entre une unité auxiliaire sélectionnée et ladite unité maîtresse (A), la transmission de ladite unité maîtresse (A) vers lesdites unités auxiliaires étant réalisée par une première ligne de signaux (MOSI) dudit bus sériel, la réception desdites unités auxiliaires étant réalisée par une deuxième ligne de signaux (MISO) dudit bus sériel, une troisième ligne de signaux (SCK) dudit bus sériel étant utilisée pour la transmission unidirectionnelle auxdites unités auxiliaires d'impulsions d'horloge émises par ladite unité maîtresse (A) ; et
- décoder les messages de données dirigés de l'unité maîtresse (A) vers les unités auxiliaires, avant de délivrer lesdits messages de données aux unités auxiliaires, et coder les messages de données dirigés de chaque unité auxiliaire vers ladite unité maîtresse (A) avant de délivrer lesdits messages de données à ladite unité maîtresse (A).

6. Procédé selon la revendication 5, caractérisé en ce que lesdits messages de donnés échangés de façon bidirectionnelle entre ladite unité maîtresse (A) et lesdites unités auxiliaires ($B_1$, $B_2$, $B_n$) sont formés par un nombre prédéterminé de bits.

7. Procédé selon la revendication 6, caractérisé en ce que ledit nombre prédéterminé de bits est égal à 32.